Europäisches Patentamt

European Patent Office

Office européen des brevets

(11) Veröffentlichungsnummer: **0 245 762**
**B1**

(12) **EUROPÄISCHE PATENTSCHRIFT**

(45) Veröffentlichungstag der Patentschrift: **04.04.90**

(51) Int. Cl.⁵: **B 30 B 5/06, F 16 J 15/16**

(21) Anmeldenummer: **87106549.6**

(22) Anmeldetag: **06.05.87**

(54) **Gleitflächendichtung an einer Doppelbandpresse.**

(30) Priorität: **16.05.86 DE 3616619**

(43) Veröffentlichungstag der Anmeldung:
**19.11.87 Patentblatt 87/47**

(45) Bekanntmachung des Hinweises auf die
Patenterteilung:
**04.04.90 Patentblatt 90/14**

(84) Benannte Vertragsstaaten:
**FR GB IT SE**

(56) Entgegenhaltungen:
**DE-A-2 907 086**
**DE-A-2 937 410**
**US-A-4 285 525**

(73) Patentinhaber: **Held, Kurt**
**Alte Strasse 1**
**D-7218 Trossingen 2 (DE)**

(72) Erfinder: **Held, Kurt**
**Alte Strasse 1**
**D-7218 Trossingen 2 (DE)**

Courier Press, Leamington Spa, England.

EP 0 245 762 B1

**Beschreibung**

Die Erfindung betrifft eine Gleitflächendichtung an einer Doppelbandpresse gemäß dem Oberbegriff des Patentanspruchs 1.

Doppelbandpressen (siehe DE-OS 24 21 296) dienen zur kontinuierlichen Herstellung endloser bahnförmiger Werkstoffe, insbesondere zur Herstellung von dekorativen Schichtstofflaminaten, Spanplatten, Faserplatten, kupferkaschierten Elektrolaminaten und dergleichen. Diese Doppelbandpressen besitzen zwei endlose umlaufende Preßbänder oder Preßbandpakete (siehe DE-OS 33 15 367) zwischen denen die Werkstoffbahn unter Einwirkung von Druck und falls notwendig auch Wärme bei gleichzeitigem Transport in Vorlaufrichtung ausgehärtet wird. Zur Erzeugung des auf die Werkstoffbahn wirkenden Drucks besitzen die sogenannten isobaren Maschinen dieser Gattung Druckkammern, in denen der Druck durch fluide Druckmittel, wie Öl oder Druckluft, aufgebaut wird. Diese Druckkammern, die von einer Druckplatte und dem Preßband in vertikaler Richtung begrenzt werden, müssen an ihren seitlichen Rändern gegenüber dem Außenraum abgedichtet sein, damit kein unerwünschter Druckmittelverlust eintritt, der sowohl zur Verschmutzung der Werkstoffbahn als auch zu einem erhöhten Energiebedarf der Doppelbandpresse führen kann.

Die Abdichtung der seitlichen Ränder an den Druckkammern erfolgt durch Gleitflächendichtungen. Diese Gleitflächendichtung ist um die Druckkammer ringsumlaufend, in die Druckplatte so eingesetzt, daß sie mit einer Fläche mit einem gewissen Anpreßdruck auf dem Preßband aufliegt. Da die Druckplatte ortsfest im Pressengestell angebracht ist und sich das Preßband bewegt, gleitet das Preßband an dieser Fläche entlang. Dadurch entsteht eine auf die Gleitflächendichtung einwirkende Reibungskraft. Das im Innern der Druckkammer vorhandene Druckmittel übt ebenfalls im wesentlichen in Preßbandebene verlaufende Druckkräfte auf die Gleitflächendichtung aus. Sowohl diese Druckkräfte als auch die Reibungskräfte müssen von der Gleitflächendichtung ohne unzulässige Verformungen aufgenommen und in die Druckplatte eingeleitet werden.

Bekannt ist die Ausbildung einer solchen Gleitflächendichtung aus der DE-PS 27 22 197. Die dort gezeigte Gleitflächendichtung besteht aus einem im Querschnitt rechteckigen Dichtungskörper, der in einer u-förmigen Halteleiste gefaßt ist. Die u-förmige Halteleiste ist in einer Nut in der Druckplatte eingesetzt und besitzt seitlich angebrachte Stützwinkel, die sich in Aussparungen in der Druckplatte abstützen. Damit werden die Reibungskräfte von dem Dichtungskörper über die u-förmige Halteleiste und die Stützwinkel in die Druckplatte eingeleitet. Die vom Druckmittel im Innern der Druckkammer auf den Dichtungskörper ausgeübten Druckkräfte werden von der uförmigen Halteleiste ebenfalls auf die Druckplatte übertragen, da die uförmige Halteleiste an der druckkammerabgewandten Wand der Nut anliegt.

Damit während des Betriebes der Doppelbandpresse keine Leckstellen in der Abdichtung der Druckkammer entstehen, muß sich die Gleitflächendichtung wechselnden Dicken der Werkstoffbahn anpassen können. Dazu ist die bekannte Gleitflächendichtung in der in der Druckplatte befindlichen Nut in vertikaler Richtung, d.h. nutein- bzw. nutauswärts, beweglich angeordnet. Da die u-förmige Halteleiste jedoch durch die im Innern der Druckkammer wirkenden Druckkräfte gegen die druckkammerabgewandte Wand der Nut gepreßt wird, tritt bei einer solchen vertikalen Bewegung wiederum eine Reibungskraft auf, die diese vertikale Bewegung behindert. Eine weitere zu überwindende Reibungskraft in vertikaler Richtung ist an der Stützfläche in den Aussparungen vorhanden, da die Stützwinkel starr mit der u-förmigen Halteleiste verbunden sind. Somit erfolgt das Nachstellen der Dichtung in vertikaler Richtung mit einer gewissen Verzögerung, wodurch eine erhöhte Leckrate für das Druckmittel auftritt.

In der Praxis hat es sich gezeigt, daß diese Reibungskräfte insbesondere bei höheren Drükken so groß werden können, daß ein Verklemmen der Gleitflächendichtung in der Nut eintritt. Erfolgt dieses Verklemmen bei einer nutauswärts gerichteten Bewegung der Gleitflächendichtung, so kommt es zu einem schlagartigen Druckabfall, der die Qualität der Werkstoffbahn nach haltig negativ beeinflußt. Besonders nachteilig ist, wenn ein solches Verklemmen der Gleitflächendichtung bei einer Bewegung nuteinwärts auftritt. Dann erhält man einen erhöhten Verschleiß der Gleitflächendichtung, unter Umständen kann daraus sogar eine totale Zerstörung der Gleitflächendichtung und des teuren Preßbandes resultieren.

Eine weitere Gleitflächendichtung an einer Doppelbandpresse ist aus der DE-A1-2 937 410 bekannt geworden. Dort ist eine Doppelbandpresse mit im Pressengestell befindlichen Druckkammern beschrieben, in denen ein fluides Druckmittel auf die Innenseiten der Preßbänder einwirkt. Diese Druckkammern besitzen balgförmige Wandungen, die mit einem Ende dicht am Pressengestell und mit dem anderen Ende dicht an einer in der Druckkammer angeordneten Trägerplatte befestigt sind. Die Trägerplatte besitzt einen spaltförmigen Abstand zu dem Preßband und hat auf der dem Preßband zugewandten Seite an den Rändern längs- und querverlaufende, aus Teflon bestehende Dichtungen, an denen das Preßband entlanggleitet. Die im Querschnitt ungefähr halbkreisförmig ausgebildete balgförmige Wandung der Druckkammer ist elastisch, um eine vertikale Bewegbarkeit der Trägerplatte zu gestatten und besteht aus einer Kunststoffolie oder einem gummiartigen Stoff. Die Trägerplatte besteht aus einem biegsamen Material, beispielsweise Hartgummi oder Kunststoff, damit sie sich der Form des zu verpressenden Materials in longitudinaler und transversaler Richtung anpassen kann.

Nachteilig bei dieser Gleitflächendichtung ist, daß die Trägerplatte aus biegsamen Material besteht. Dadurch kann sich die Trägerplatte unter dem Einfluß der Reaktionskräfte des Preßgutes verformen, wodurch wiederum ein ungleichmäßiger Preßdruck auf das Material ausgeübt wird. Dies führt zu erheblichen Dickentoleranzen im verpreßten Material.

Sowohl die Trägerplatte als auch die Druckkammerwandungen bestehen aus Kunststoff und besitzen daher eine geringe Steifigkeit in der Preßbandebene. Dadurch sind sie wenig geeignet zur Aufnahme von Druck- und Reibkräften und zur Überführung dieser Kräfte in die Druckplatte. Insbesondere bei höheren Drücken läßt sich diese Gleitflächendichtung daher nicht betriebssicher in der Doppelbandpresse einsetzen.

Der Erfindung liegt die Aufgabe zugrunde, die Gleitflächendichtung an einer Doppelbandpresse so zu verbessern, daß sie in vertikaler Richtung ohne wesentliche Reibung leicht beweglich ist und gleichzeitig die beim Betrieb der Doppelbandpresse auftretenden Kräfte ohne Verformung oder Zerstörung aufnehmen kann.

Die Lösung dieser Aufgabe wird durch die im Kennzeichen des Patentanspruchs 1 beschriebene technische Lehre vermittelt.

Vorteilhafte Ausgestaltungen der erfinderischen Lehre sind in den Unteransprüchen angegeben. Als besonders geeignetes Material für den eigentlichen Dichtungskörper der Gleitflächendichtung hat sich ein aus einzelnen Schichten bestehendes und zu einem kompakten Körper verpreßtes Kohlefaserschlauchgeflecht, das mit Polyäther-Ätherketon imprägniert ist, erwiesen. Ein solcher Dichtungskörper kann hohe Zugkräfte aufnehmen und besitzt einen nicht zu hohen Gleitreibungskoeffizienten in Verbindung mit dem Preßband. Um selbst die bei einer erfindungsgemässen Gleitflächendichtung noch auftretenden geringen Leckagen des Druckmittels auffangen zu können, wird gemäß Unteranspruch 45 eine zweite erfindungsgemässe Gleitflächendichtung atmosphärenseitig so angeordnet, daß zwischen beiden Gleitflächendichtungen ein Raum entsteht, der zur Sammlung der Leckage dient. Durch eine Bohrung in der Druckplatte wird diese Leckage dann abgesaugt.

Die mit der Erfindung erzielbaren Vorteile bestehen insbesondere darin, daß die Gleitflächendichtung Abweichungen des Preßbandes in vertikaler Richtung, die durch unvermeidliche Dickenunterschiede in der vorlaufenden Werkstoffbahn hervorgerufen werden, praktisch ohne Verzögerung folgen kann. Damit ist immer ein Anliegen der Gleitflächendichtung am Preßband gewährleistet, so daß keine Leckstellen und somit kaum Druckmittelverluste auftreten. Ein Verklemmen der Gleitflächendichtung in vertikaler Richtung in der Druckplatte ist vollkommen ausgeschlossen. Die vom Druckmittel ausgeübten Druckkräfte und die zwischen dem Preßband und dem Dichtungskörper auftretenden Reibkräfte werden über die steife Trägerplatte und den Balg sicher in die Druckplatte übergeleitet, so daß die Doppelbandpresse betriebssicherer und mit geringerem Energieaufwand zu betreiben ist.

Ein bevorzugtes Ausführungsbeispiel der Erfindung ist in den Zeichnungen dargestellt und wird im folgenden näher beschrieben. Es zeigen:

Fig. 1 schematisch eine Doppelbandpresse in Seitenansicht,

Fig. 2 eine Draufsicht auf die Druckplatte von der Preßbandinnenseite aus gesehen,

Fig. 3 einen Schnitt entlang der Linie A-A in der Fig. 2,

Fig. 4 einen Schnitt durch den Randbereich der Druckplatte mit einer Doppeldichtung,

Fig. 5 einen Schnitt durch den Randbereich der Druckplatte bei einer weiteren Ausführungsform für die Trägerplatte,

Fig. 6 eine Form zur Herstellung des Dichtungskörpers,

Fig. 7 eine teilweise weggeätzte Form zur Herstellung des Dichtungskörpers,

Fig. 8 den Randbereich einer Trägerplatte vor dem Aufbringen des Dichtungskörpers gemäß einer weiteren Ausführungform,

Fig. 9 den Randbereich einer Trägerplatte vor dem Aufbringen des Dichtungskörpers in einer anderen Ausführungsform,

Fig. 10 eine Vorrichtung zum Aufbringen des Dichtungskörpers auf die Trägerplatte in der weiteren Ausführungsform,

Fig. 11 den Randbereich der Druckplatte entsprechend einer weiteren Ausführungsform und

Fig. 12 den Randbereich der Druckplatte in einer weiteren Ausführungsform für die Halterung.

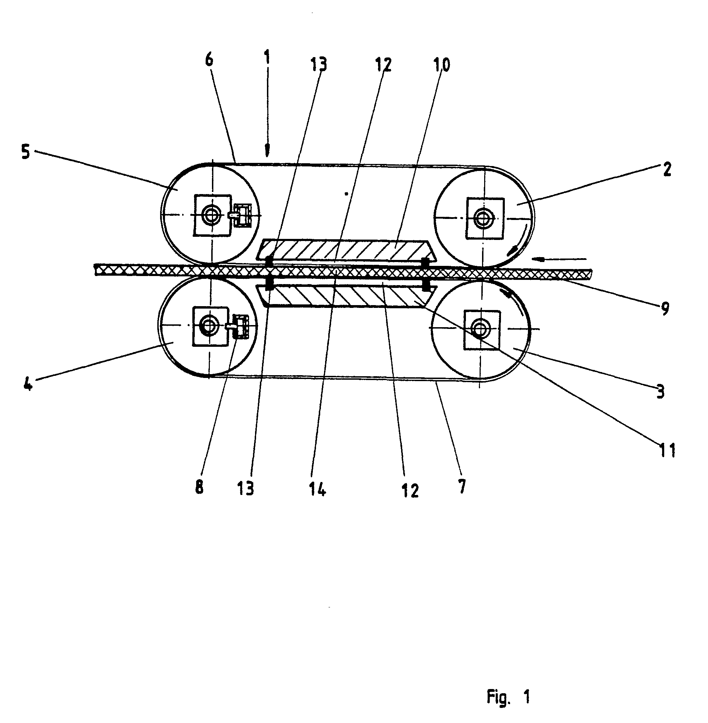

Die in Fig. 1 dargestellte Doppelbandpresse 1 besitzt vier in einem Pressengestell gelagerte Umlenktrommeln 2, 3, 4, 5. Das Pressengestell ist in der Zeichnung der Übersichtlichkeit halber weggelassen. Um jeweils zwei der Umlenktrommeln, die sich entsprechend der Pfeile in den Umlenktrommeln 2 und 3 drehen, ist ein Preßband 6, 7 herumgeführt, das mit Hydraulikzylindern 8 gespannt wird. Die Preßbänder 6, 7 bestehen in der Regel aus hochzugfestem Stahl. Zwischen den Preßbändern 6, 7, in der sogenannten Reaktionszone 14, wird eine in der Zeichnung von rechts nach links vorlaufende Werkstoffbahn 9, die aus mit Kunstharz getränkten Schichtstoffen, Faser-Bindemittelgemischen oder dergleichen bestehen kann, unter gleichzeitiger Anwendung von Wärme und Druck verdichtet. Sollte das Preßgut eine entsprechende Behandlung erfordern, so kann die Verdichtung auch ohne Wärmeeinwirkung oder unter Kühlung erfolgen.

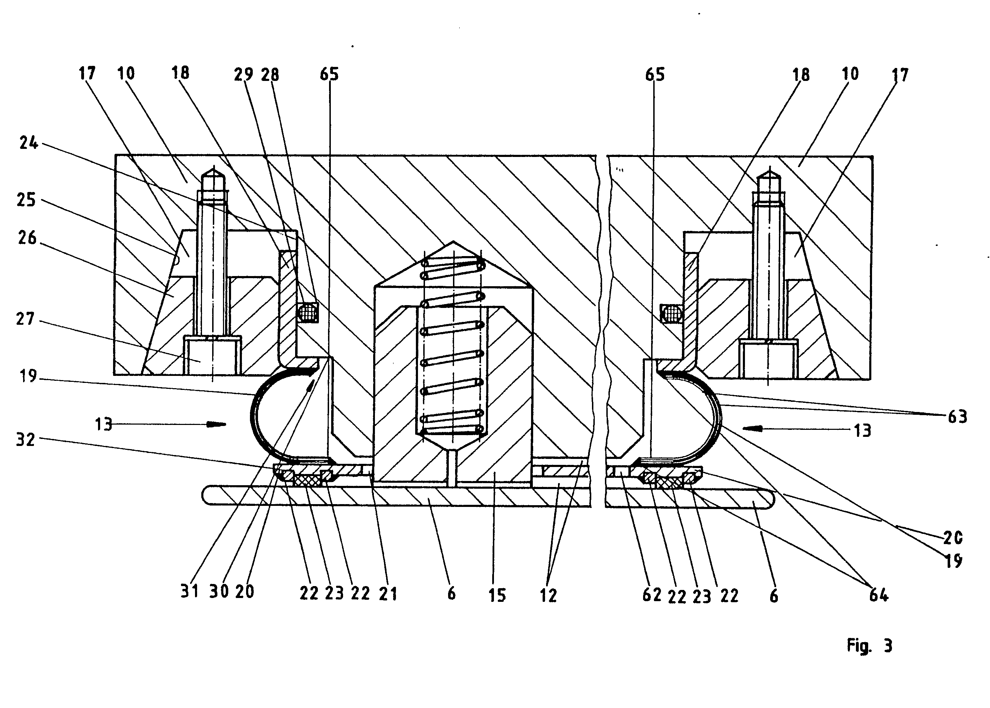

Zur Übertragung von Wärme auf die Werkstoffbahn 9 in der Reaktionszone 14, sind die einlaufseitigen Umlenktrommeln 2, 3 beheizt und erwärmen dadurch die Bandtrums 6 und 7. Die von diesen aufgenommene Wärmemenge wird durch deren Wärmekapazität in die Reaktionszone 14 transportiert und dort an die Werkstoffbahn 9 abgegeben, wo sie zum Aushärten des Preßgutes dient. Selbstverständlich kann die Erwärmung des Preßgutes auch mit anderen Mitteln, beispielsweise durch in der Druckkammer 12 angeordnete wärmeübertragende Elemente 15 (siehe Fig. 3) erfolgen, die einen Wärmestrom von der beheizten, auf einer erhöhten Temperatur befindlichen Druckplatte 10, 11 auf das Preßband 6, 7 und von dort auf die Werkstoffbahn 9 übertragen. Solche wärmeleitenden Elemente 15 können entsprechend der Offenlegungsschrift DE-OS 33 25 578 ausgestaltet sein.

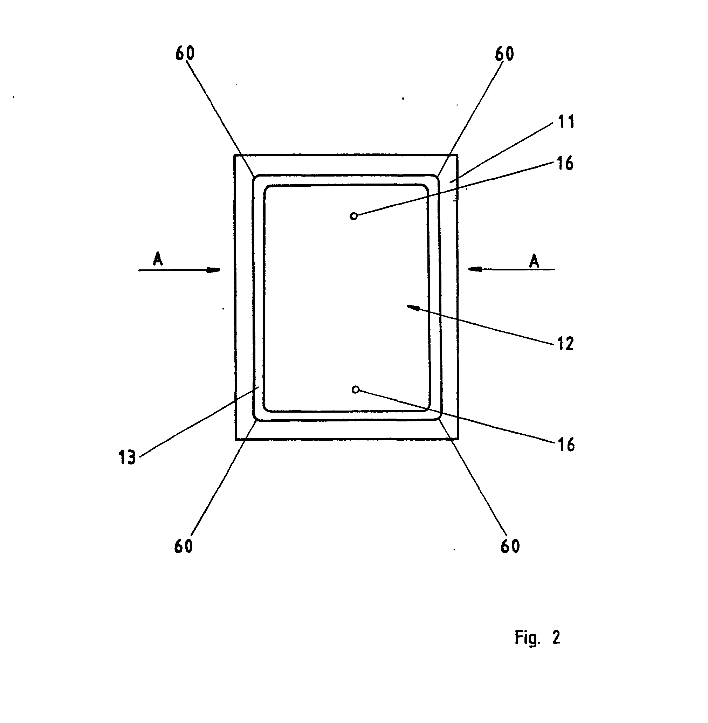

Zur Erzeugung des auf die Werkstoffbahn 9 in der Reaktionszone 14 wirkenden Drucks wird ein unter Druck setzbares fluides Druckmedium in die Druckkammer 12 eingebracht. Die Druckkammer 12 ist der Raum zwischen der Druckplatte 10, 11 und der Innenseite des Preßbandes 6, 7. Zu den Seiten ist die Druckkammer 12 mit einer Gleitflächendichtung 13 begrenzt, die ohne Unterbrechung rings um den Rand der Druckkammer 12 herum verläuft wie in Fig. 2 zu sehen ist. Die Druckkammer 12 besitzt im wesentlichen eine rechteckige Gestalt, die allerdings abgerundete Ecken 60 mit geringstmöglichem Radius aufweist, da die Gleitflächendichtung aus einem einzigen zusammenhängenden Stück zu der gewünschten Form gebogen wird. Als Druckmedium wird ein synthetisches Öl verwendet, das über Bohrungen 16 in der Druckplatte 10, 11 in die Druckkammer 12 mit dem gewünschten Druck zugeführt wird. Genausogut kann aber auch ein Gas, beispielsweise Druckluft verwendet werden.

In Fig. 3 ist ein Schnitt durch die obere Druckplatte 10 dargestellt, in der eine erfindungsgemässe Gleitflächendichtung 13 eingesetzt ist, die im wesentlichen aus einer Trägerplatte 20 mit Dichtungskörper 23 und einem an der Druckplatte 10 befestigten Balg 19 besteht. Im Randbereich der Druckplatte 10 ist eine absatzförmige Ausnehmung 31 und eine sich daran anschliessende entlang des Randes der Druckkammer 12 ringsumlaufende Nut 17 zur Befestigung der ebenfalls ringsumlaufenden Halterung 18 für die Gleitflächendichtung 13 vorhanden. Die Halterung 18 besteht aus einem im Querschnitt L-förmigen Stahlwinkel, an dessen kürzerem Schenkel ein elastischer aus Metall bestehender Balg 19, der einen . ungefähr halbkreisförmigen Querschnitt besitzt, so angeschweißt ist, daß dessen Öffnung der Druckkammer 12 zugewandt ist. Der Balg 19 setzt sich aus einzelnen aufeinandergelegten, rechteckigen Metallfolien oder -blechen 63 zusammen, die entlang der Kanten 64 miteinander zu einem Blechpaket verschweißt sind. Als Material für diese Bleche eignet sich beispielsweise ein hochzugfester Federstahl. Dieses Blechpaket wird anschliessend so gebogen, daß es einen halbrunden bis U-förmigen Querschnitt besitzt, wie er in Fig. 3 zu sehen ist und eine rinnenförmige Gestalt hat. Durch diesen Aufbau erhält das Blechpaket eine hohe Elastizität und besitzt eine starke Federwirkung. Anschliessend wird das rinnenförmige Blechpaket in eine Profilform eingelegt und an den entsprechenden Stellen zu einem Rechteck gebogen, wie es in Fig. 2 mit dem Bezugszeichen 13 angedeutet ist, und an den zwei Enden miteinander verschweißt, so daß der Metallbalg 19 eine zusammenhängende Form erhält. Die Profilform, die danach entfernt wird, unterstützt das Biegen der Rundungen an den Ecken 60. Die einzelnen Metallfolien oder -bleche 63 des Blechpakets können auch aus Galvanoformteilen bestehen, die bereits in der gewünschten halbrunden Form galvanisch abgeschieden und dann an den Kanten 64 miteinander verschweißt werden. Dadurch kann der beschriebene Arbeitsgang des Biegens des Blechpakets zur halbrunden Form entfallen. Das der Halterung 18 gegenüberliegende Ende des Metallbalgs 19 ist wiederum mit einer steifen, aus Metall bestehenden Trägerplatte 20 verschweißt, wie in Fig. 3 zu sehen ist. Diese rechteckige Trägerplatte 20 ist einstückig ausgebildet und reicht über die gesamte Breite und Länge der Druckkammer 12, steht an den Rändern etwas über und besitzt einige Durchbrüche 62 innerhalb der Druckkammer 12, durch die das über die Bohrungen 16 zugeführte Druckmittel hindurchtreten und auf das Preßband 6 einwirken kann. Durch weitere Durchbrüche 21 in der Trägerplatte 20 innerhalb der Druckkammer 12 reichen die wärmeübertragenden Elemente 15 auf das Preßband 6 hindurch. Diese wärmeübertragenden Elemente 15 liegen einerseits an der beheizten Druckplatte 10 an und berühren andrerseits das Preßband 6 schleifend. so daß sie Wärme von der Druckplatte 10 auf das Preßband 6 übertragen. In der Trägerplatte 20 befindet sich entlang deren Rand, ringsumlaufend eine Vertiefung 32, in die eine Fassung 22 eingeschweißt ist, in der der eigentliche Dichtungskörper 23 befestigt ist. In diesem Randbereich befinden sich in der Trägerplatte 20 jedoch keine weiteren Durchbrüche, insbesondere keine Durchbrüche, die zur Atmosphärenseite reichen.

Die Gleitflächendichtung 13 ist so in die Druckplatte 10 eingesetzt, daß der längere Schenkel der Halterung 18 an der vertikalen druckkammerseitigen Wand 24 der Nut 17 und der kürzere Schenkel an der horizontalen Wand 30 der absatzförmigen Ausnehmung 31 in der Druckplatte 10 anliegt. Die der Druckkammerseite gegenüberliegende Wand 25 der Nut 17 verläuft schräg, so daß eine in sich geschlossene, keilförmige, in die Nut 17 eingelegte Leiste 26 die Halterung 18 an der druckkammerseitigen Wand 24 festklemmt. Die keilförmige Leiste 26 ist in zweckmässigen Abständen an der Druckplatte 10 mittels Schrauben 27 befestigt. In der druckkammerseitigen Wand 24 verläuft eine weitere Nut 28, in die ein aus Aluminium, Weichkupfer oder einem ähnlichem Metall bestehender Dichtdraht 29 mit rundem Querschnitt so eingelegt ist, daß er durch den längeren Schenkel der Halterung 18 in die Nut 28 gepreßt wird. Durch diesen Dichtdraht 29 wird das fluide Druckmittel gehindert, über die Halterung 18, an den Wänden 30 und 24 entlang in die Nut 17 und damit auf die Außen- bzw. Atmosphärenseite der Druckkammer 12 zu entweichen. Anstelle des metallenen Dichtdrahtes 29 kann auch ein aus einem Elastomer bestehender O-Ring in die Nut 28 eingelegt sein, falls die Temperatur der Druckplatte 10 dies gestattet.

Die zusammenhängende Fassung 22, in der der eigentliche Dichtungskörper 23 befestigt ist, ist in der Vertiefung 32. die auf der dem Preßband 6 zugewandten Seite der Trägerplatte 20 liegt, eingeschweißt. Dieser Dichtungskörper 23 besitzt einen im wesentlichen rechteckigen Querschnitt und liegt mit der der Trägerplatte 20 abgewandten Seite auf dem Preßband 6 auf, das sich beim Betrieb der Doppelbandpresse 1 gleitend entlang dem Dichtungskörper 23 bewegt. Der Dichtungskörper 23 besteht aus einem als Gleitwerkstoff wirkenden Kunststoff. Dafür kommen Thermoplaste und Duroplaste in Frage, die den in der Reaktionszone 14 herrschenden höheren Temperaturen standhalten, wie beispielsweise Polyimide. Diese Kunststoffe können, falls erforderlich, mit Füllstoffen versehen sein. Besonders geeignet als Gleitwerkstoff hat sich ein mehrlagig ausgebildetes Schlauchgeflecht aus Kohlefasergeweben erwiesen, das mit einem aromatischem Polyäther, nämlich einem Polyäther-Ätherketon, getränkt und anschliessend zu dem Dichtungskörper 23 in der Fassung 22 verpreßt ist. Dieser Gleitwerkstoff besitzt eine gute Temperaturbeständigkeit und kann durch die Verstärkung mit Kohlefasern hohe Zugkräfte aufnehmen.

Durch den beschriebenen Aufbau der Gleitflächendichtung 13 ist die Druckkammer 12 seitlich vollständig gegen die Atmosphäre abgedichtet. Unmittelbar am Preßband 6 dichtet der Dichtungskörper 23 und die Trägerplatte 20, die im Randbereich keine zur Atmosphäre gerichteten Durchbrüche besitzt. In dem der Druckplatte 10 zu gerichteten Bereich hindert dann der Metallbalg 19 das Druckmittel am Austritt zur Atmosphäre. Wie schon weiter oben beschrieben, kann aufgrund des Dichtdrahtes 29 auch kein Druckmittel über die Halterung 18 entweichen.

Die erfindungsgemässe Gleitflächendichtung 13 ist in der Lage, die verschiedenen in der Doppelbandpresse 1 auftretenden Kräfte aufzunehmen. Wie anhand der Fig. 3 zu sehen ist, wirkt von der Druckkammer 12 her eine Kraft auf die Gleitflächendichtung 13. die bestrebt ist, die Gleitflächendichtung 13 nach außen, d.h. von der Druckkammer 12 weg der Atmosphärenseite zu zu drücken. Da die Gleitflächendichtung 13 in sich ringförmig geschlossen und mit der Trägerplatte 20 verbunden ist, wird diese sowohl in Längs- als auch in Querrichtung wirkende Druckkraft in die aus einem Stück bestehende Trägerplatte 20 eingeleitet und von dieser aufgenommen. Mit Längsrichtung in der Doppelbandpresse 1 ist dabei die Vorschubrichtung der Werkstoffbahn 9, die in Fig. 1 mit einem Pfeil eingezeichnet ist, und mit Querrichtung die zur Längsrichtung senkrechte, in der Ebene der Werkstoffbahn 9 verlaufende Richtung bezeichnet. Durch geeignete Dimensionierung dieser aus hochzugfestem Metall bestehenden Trägerplatte 20 läßt sich die Doppelbandpresse 1 damit bei beliebigen Drücken in der Druckkammer 12 betreiben.

Die Gleitflächendichtung 13 ist ortsfest in der Druckplatte 10 eingebaut und wird durch den auf die Innenflächen 65 in der halbrunden Öffnung des Metallbalges 19 wirkenden Druck des fluiden Druckmittels der Druckkammer 12 zuzüglich der Federkraft des Metallbalges 19 gegen das Preßband 6 gepreßt. Das Preßband 6 bewegt sich jedoch mit einer gewissen Geschwindigkeit gegenüber dem ortsfesten Dichtungskörper 23, so daß eine Reibungskraft entsteht, die in Längsrichtung der Doppelbandpresse 1 wirkt. Diese Reibungskraft, die im wesentlichen proportional dem Anpreßdruck des Dichtungskörpers 23 an das Preßband 6 ist, wird vom Dichtungskörper 23 aufgenommen und über die Trägerplatte 20 und den Metallbalg 19 in die Druckplatte 10 eingeleitet. Da der Dichtungskörper 23 bevorzugt aus einem mit Polyäther-Ätherketon imprägnierten hochzugfesten Kohlefaserlaminat besteht, können auch höhere Drücke keine zerstörerischen Wirkungen auf die Gleitflächendichtung 13 ausüben.

Da die Werkstoffbahn 9 über deren Breite und Länge gesehen in der Regel immer gewisse Dickenunterschiede aufweist, muß die Gleitflächendichtung 13 in vertikaler Richtung, das ist die sowohl auf Längsals auch Querrichtung in der Doppelbandpresse 1 senkrecht stehende Richtung, beweglich sein, damit der Dichtungskörper 23 unter allen Umständen am Preßband 6 gleitend anliegt. Andernfalls entstehen unvermeidbarerweise Undichtigkeiten in der Druckkammer 12, durch die das Druckmittel entweicht, so daß zur Ersetzung des Druckmittelverlustes ein erhöhter Energieaufwand erforderlich wird. Aufgrund der Elastizität des Metallbalges 19 ist die Gleitflächendichtung 13 in vertikaler Richtung frei beweglich und folgt den vertikalen Abweichungen des Preßbandes 6, so daß Undichtigkeiten der Druckkammer 12 vermieden werden. Vorteilhafterweise erfolgt diese Bewegung in vertikaler Richtung ohne Reibung, womit eine unverzögerte vertikale Bewegung resultiert und ein Verkanten und Verklemmen der Gleitflächendichtung 13 völlig ausgeschlossen ist.

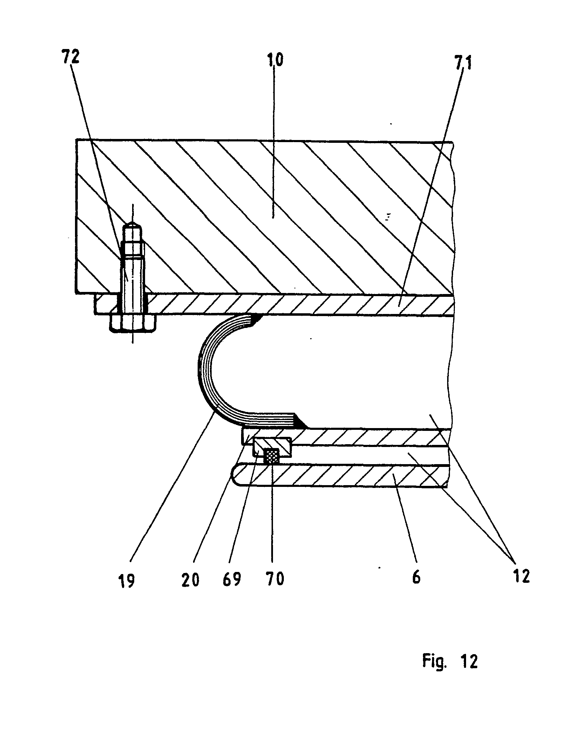

Eine weitere Ausführungsform für die Halterung ist in Fig. 12 gezeigt. Die Druckplatte 10 verläuft im wesentlichen parallel zum Preßband 6 ohne Ausnehmungen und Nuten. Parallel zur Trägerplatte 20 ist auf der der Trägerplatte 20 abgewandten Seite des Metallbalgs 19 eine weitere einstückige Trägerplatte 71 angeordnet, die die Funktion der Halterung übernimmt. Diese Trägerplatte 71 ist mit Schrauben 72 an der Druckplatte 10 befestigt. Der Metallbalg 19 wiederum ist mit seinem der Trägerplatte 20 abgewandtem Ende an der Trägerplatte 71 verschweißt. Durch diese Ausgestaltung der Halterung vergrößert sich die Höhe der Druckkammer 12 gegenüber derjenigen der Fig. 3, was erforderlich sein kann, wenn verschiedene Einbauten in der Druckkammer 12 untergebracht werden müssen.

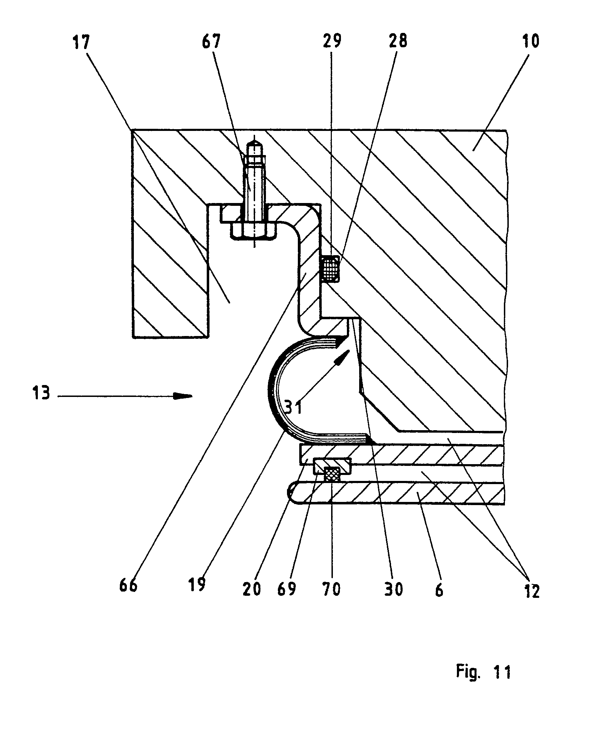

Eine etwas abgewandelte Form für die Halterung der Gleitflächendichtung 13 ist in Fig. 11 gezeigt. Die ringsumlaufende, zusammenhängende Halterung 66 besitzt einen stufenförmigen Querschnitt mit zwei horizontalen und einer vertikalen Fläche. Eine dieser horizontalen Flächen ist wiederum mit dem Metallbalg 19 verschweißt und liegt an der Wand 30 der absatzförmigen Ausnehmung 31 der Druckplatte 10 an. Die zweite horizontale, dem Metallbalg 19 abgewandte Fläche liegt der Grundfläche der Nut 17 an und ist in zweckmässigen Abständen mit Schrauben 67 an der Druckplatte 10 befestigt. Die übrige Ausgestaltung dieser Gleitflächendichtung entspricht der in Fig. 3 gezeigten und bereits beschriebenen Gleitflächendichtung 13.

Der Aufbau einer erfindungsgemässen Gleitflächendichtung ist anhand der oberen Druckplatte 10 beschrieben. Selbstverständlich befindet sich in der unteren Druckplatte 11 der Doppelbandpresse 1 ebenfalls eine solche Gleitflächendichtung 13. Im folgenden soll noch eine weitere Ausführungsvariante für eine erfindungsgemässe Gleitflächendichtung beschrieben werden, wobei diese aus Vereinfachungsgründen wiederum nur an der oberen Druckplatte 10 erläutert werden soll.

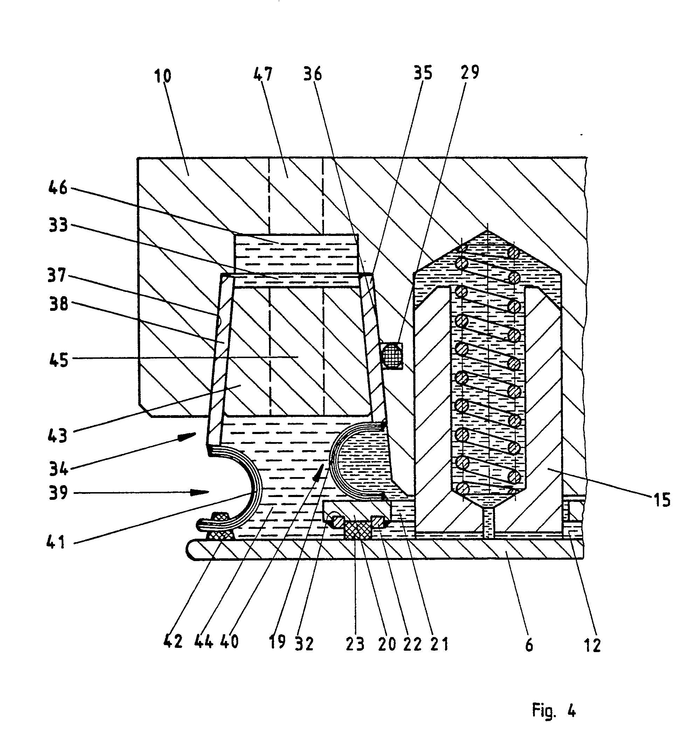

In Fig. 4 ist eine aus zwei nebeneinanderliegenden, ringförmig geschlossenen Gleitflächendichtungen 39, 40 bestehende Doppeldichtung gezeigt, die mit den erfindungsgemässen Gleitflächendichtungen ausgeführt ist, wobei die äußere Gleitflächendichtung 39 die innere Gleitflächendichtung 40 ganz umfaßt. Im Randbereich der Druckplatte 10 befindet sich eine Ausnehmung 34 zur Aufnahme dieser Gleitflächendichtungen, in der wiederum eine ringsumlaufende Nut 33 mit abgeschrägten Wänden eingebracht ist. An der druckkammerseitigen Wand 36 befindet sich die festgeklemmte Halterung 35 für die innere Gleitflächendichtung 40, die der Druckkammer 12 zugewandt ist. Die Halterung 35 besitzt im vorliegenden Ausführungsbeispiel nur einen einzigen Schenkel. Die innere Gleitflächendichtung 40 ist ansonsten wie diejenige in Fig. 3 ausgeführt, wobei gleiche Teile mit denselben Bezugszeichen bezeichnet sind. An der druckkammerabgewandten Wand 37 der Nut 33 ist die Halterung 38 für die äußere Gleitflächendichtung 39 festgeklemmt. An dem dem Preßband 6 zugewandten Ende der Halterung 38 ist ein Metallbalg 41 mit ungefähr halbkreisförmigem Querschnitt so angeschweißt, daß dessen Öffnung der Druckkammer 12 abgewandt und der Atmosphärenseite zugewandt ist. An den dem Preßband 6 zugewandten Ende des Metallbalgs 41 ist ein Dichtungskörper 42 befestigt. Dieser Dichtungskörper 42 wird durch die Elastizität des Metallbalgs 41 an das Preßband 6 angepreßt. Die Halterungen 35 und 38 werden ebenfalls mittels einer in die Nut 33 eingelegten, ringsumlaufenden keilförmigen Leiste 43, die einen trapezförmigen Querschnitt besitzt, an den entsprechenden Wänden 36 und 37 der Nut 33 festgeklemmt. In zweckmässig gewählten Abständen ist diese keilförmige Leiste 43 mit der Druckplatte 10 verschraubt.

Zwischen der inneren Gleitflächendichtung 40 und der äußeren Gleitflächendichtung 39 entsteht somit ein rings entlang des Randes der Druckplatte 10 um die Druckkammer 12 umlaufender Hohlraum 44, der zu den Seiten von den Gleitflächendichtungen 39, 40 und in vertikaler Richtung von dem Preßband 6 sowie der keilförmigen Leiste 43 begrenzt wird. In diesem Hohlraum 44 sammelt sich die Leckage des Druckmittels an, das aus der Druckkammer 12 durch Lecks in der inneren Gleitflächendichtung 40 austritt. Die keilförmige Leiste 43 besitzt in gewissen Abständen vertikal verlaufende Durchgangsbohrungen 45, die vom Hohlraum 44 in einen im Nutgrund der Nut 33 befindlichen Sammelraum 46 führen. Von diesem Sammelraum 46 gehen weitere, in der Druckplatte 10 befindliche Bohrungen 47 ab, die an Unterdruck angeschlossen sind. Somit wird die im Hohlraum 44 gesammelte Leckage an Druckmittel über die Durchgangsbohrungen 45 in den Sammelraum 46 und von dort über die Bohrungen 47 abgesaugt. Dieses abgesaugte Druckmittel kann anschliessend erneut dem Druckmittelkreislauf zugeführt werden. Durch diese Maßnahme wird daher wirksam verhindert, daß Druckmittel seitlich aus der Druckkammer 12 austreten und die Werkstoffbahn 9 verschmutzen könnte.

Die äußere Gleitflächendichtung 39 hat fast denselben Aufbau wie die innere Gleitflächendichtung 40. Allerdings besitzt sie keine Trägerplatte. Da im Hohlraum 44 Unterdruck herrscht, treten keine zur Atmosphärenseite gerichteten Längs- und Querkräfte auf, die von der äußeren Gleitflächendichtung 39 aufgenommen werden müßten. In Fig. 4 ist in der Druckkammer 12 zur Verdeutlichung das Druckmittel durch kleine Striche angedeutet. Im Hohlraum 44 ist der sehr viel geringere Druck durch eine weniger dichte Strichelung gekennzeichnet. Es treten an dem Dichtungskörper 42 der äußeren Gleitflächendichtung 39 nur Reibungskräfte auf, die über den Metallbalg 41 und die Halterung 38 in die Druckplatte 10 eingeleitet werden. Der Dichtungskörper 42 kann wie der Dichtungskörper 23 der inneren Gleitflächendichtung 40 ausgeführt sein, allerdings ist er direkt an dem Metallbalg 41 ohne Zwischenschaltung einer Trägerplatte befestigt. Da die Anpreßkräfte und damit die Reibungskräfte bei der äußeren Gleitflächendichtung 39 geringer als diejenigen der inneren Gleitflächendichtung 40 sind, ist im allgemeinen jedoch auch ein etwas einfacher aufgebauter Dichtungskörper 42 ausreichend. Dieser kann aus einem ringsumlaufenden, zusammenhängenden Metallband bestehen, das an dem Metallbalg 41 angeschweißt ist und auf dem ein Elastomer, das die Gleitfläche bildet, aufvulkanisiert ist. Es ist auch ebenfalls möglich. das Elastomer direkt auf den Metallbalg 41 an der entsprechenden Stelle aufzuvulkanisieren.

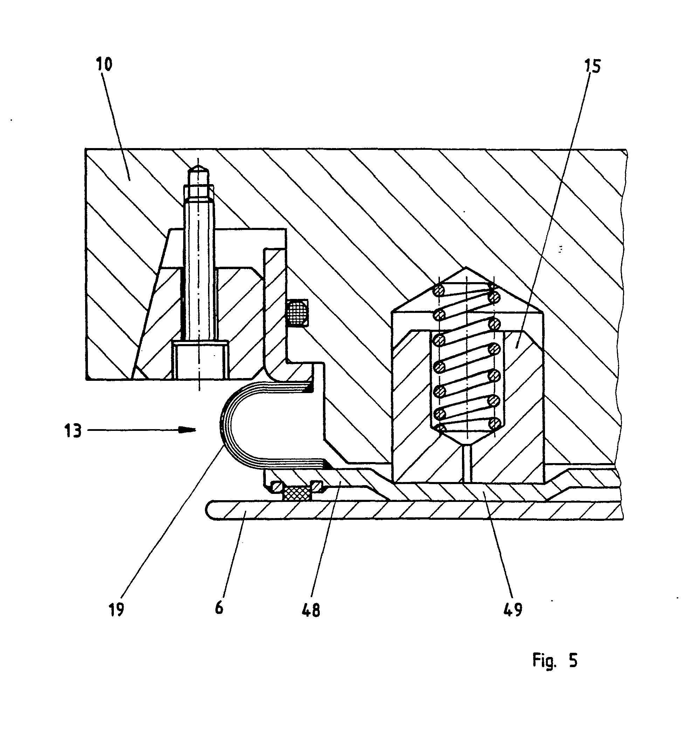

Wie bereits weiter oben erläutert nimmt die einstückige Trägerplatte 20 die aufgrund des Druckes in der Druckkammer 12 auf die Gleitflächendichtung 13 ausgeübten Quer- und Längskräfte auf. Die in der Trägerplatte 20 vorhandenen Durchbrüche 21 für die wärmeübertragenden Elemente 15 führen zu einer Querschnittsverminderung, so daß gerade bei einer Vielzahl von in der Druckplatte 10 eingesetzten wärmeübertragenden Elementen 15 die verbleibende Querschnittsfläche bei hohen Drücken nicht mehr zur Aufnahme sämtlicher Kräfte ausreichen könnte. Prinzipiell ist es zwar möglich, die Dicke des Materials für die Trägerplatte entsprechend zu erhöhen. Dies ist jedoch gerade bei beschränkten Einbauverhältnissen in der Druckplatte 10 nicht immer möglich. Für einen solchen Fall kann die Trägerplatte die in Fig. 5 gezeigte Ausgestaltung besitzen.

Die dort gezeigte Trägerplatte 48 besitzt an den Stellen, an denen die wärmeübertragenden Elemente 15 in der Druckplatte 10 angebracht sind, Einbuchtungen 49. Diese Einbuchtungen 49 haben mindestens die Grundfläche des wärmeübertragenden Elements 15 und sind so angebracht, daß sie das sich bewegende Preßband 6 flächenhaft schleifend berühren. An der dem Preßband 6 abgewandten Fläche dieser Einbuchtungen 49 liegt jeweils ein wärmeübertragendes Element 15 an. Dadurch fließt ein Wärmestrom von der beheizten Druckplatte 10 über das wärmeleitende Element 15 und die Einbuchtung 49 in der Trägerplatte 48 auf das Preßband 6. Die Trägerplatte 48 besitzt somit überall denselben Querschnitt und kann daher die eingeleiteten Längs- und Querkräfte auch bei höheren Drücken aufnehmen. Vorteilhafterweise werden dadurch gleichzeitig die aufgrund der Reibung der Wärmebrücken entstehenden Längskräfte über die Trägerplatte 48 und den Metallbalg 19 in die Druckplatte 10 eingeleitet.

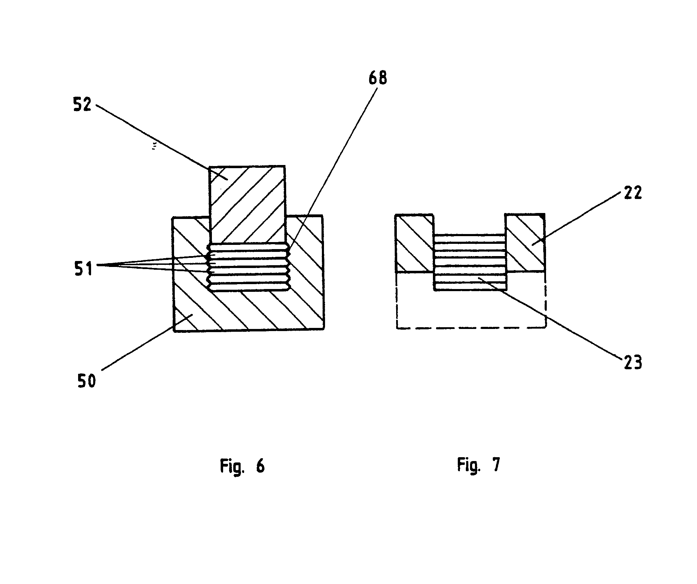

Zur Herstellung des aus Kohlefaser-Schlauchgeflecht bestehenden Dichtungskörpers 23 kann eine in Fig. 6 gezeigte Form 50 benützt werden. Diese aus Metall bestehende Form 50 besitzt einen u-profilförmigen Querschnitt und ist zu einem geschlossenen, rechteckigen Rahmen gebogen, mit einer Form wie in Fig. 2 mit dem Bezugszeichen 13 angedeutet. In diese Form 50 werden die einzelnen Schichten 51 aus Kohlefaser-Schlauchgeflecht, das mit Polyäther-Ätherketon-Harz getränkt ist, eingelegt bis die gewünschte Dicke erreicht ist. Anschliessend wird auf das Kohlefaser-Schlauchgeflecht ein rahmenförmiger Preßstempel 52 mit rechteckigem Querschnitt aufgelegt. Danach setzt man unter gleichzeitiger Wärmezufuhr das Kohlefaser-Schlauchgeflecht mit dem Preßstempel 52 unter Druck, so daß das Harz aufschmilzt. Nachdem das Harz aufgeschmolzen ist wird die Form 50 weiter unter Druck abgekühlt, wobei das Harz teilweise kristallisiert und die einzelnen Schichten 51 zu einem kompakten Laminat, dem Dichtungskörper 23, sowie dieses Laminat mit der Form 50 verbindet. Zur Unterstützung der Verbindung des Harzes mit der Form 50 können an den Innenwänden des Profils zusätzliche Hinterschneidungen 68 angebracht sein, wie sie in Fig. 6 bei den Innenwänden des Profils angedeutet sind. Sobald das Harz abgekühlt ist, wird der Preßstempel 52 entfernt und die überschüssige Form 50, wie in Fig. 7 gestrichelt dargestellt, weggeätzt. Da das Polyäther-Ätherketon-Kohlefaserlaminat gegen die meisten Chemikalien beständig ist, insbesondere gegen die gebräuchlichen Ätzmittel für Metalle, wird das Laminat beim Abätzen der metallenen Form 50 nicht angegriffen. Die Form 50 wird dabei soweit weggeätzt, daß eine Fassung 22 zum Einschweissen der Dichtung in die Trägerplatte 20 stehenbleibt und gleichzeitig der Dichtungskörper 23 über diese Fassung 22 übersteht.

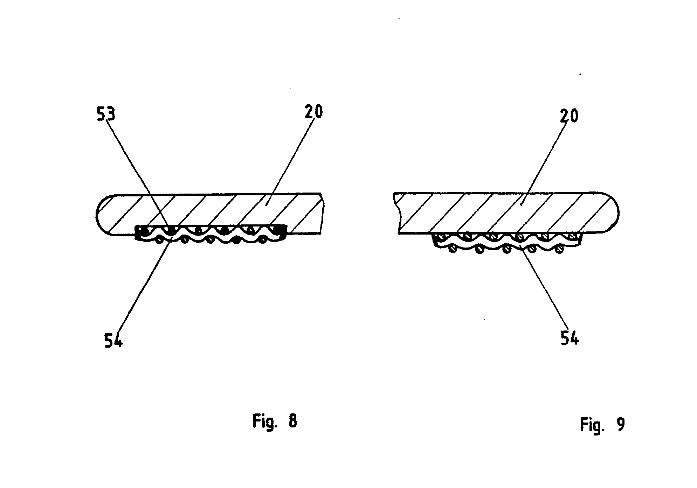

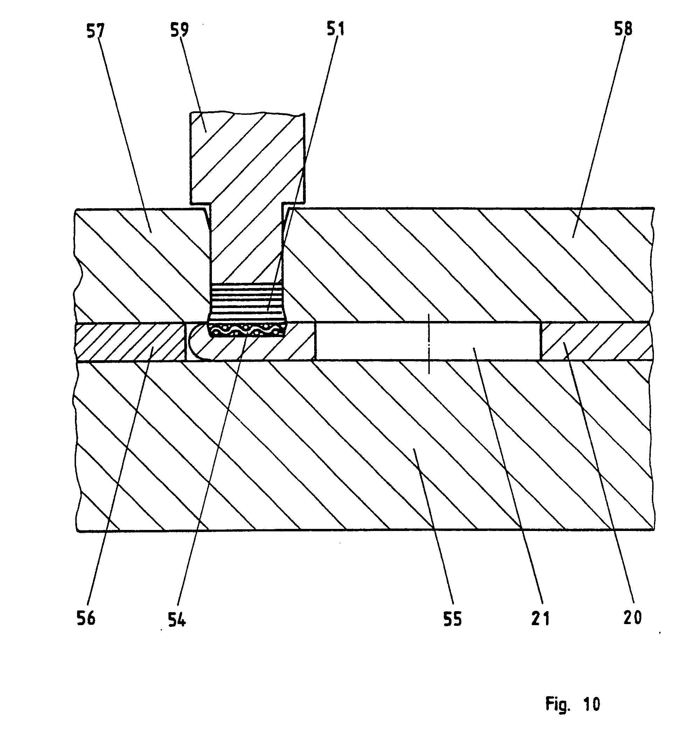

Eine weitere Möglichkeit zur Herstellung des Dichtungskörpers 23 wird in den Fig. 8 bis 10 gezeigt. Dazu wird im Randbereich der Trägerplatte 20, wo der Dichtungskörper 23 angebracht werden soll, eine ringsumlaufende Metallgaze 54 aus Edelstahl, wie in Fig. 9 zu sehen, aufgelegt und mit der Trägerplatte 20 verschweißt. Die Verschweissung kann mit Hilfe einer Buckel-, Rollnaht- oder Kohlendioxid-Laser-Schweissung erfolgen. Es ist auch möglich, im Randbereich der Trägerplatte 20 eine ringsumlaufende Ausnehmung 53 anzubringen, in die die Edelstahlgaze 54 gemäß Fig. 8 eingelegt und dann mit der Trägerplatte 20 verschweißt wird. Die Edelstahlgaze 54 dient zur Verbesserung der Haftung zwischen Trägerplatte 20 und Dichtungskörper 23. Wie weiter in Fig. 10 zu sehen ist, wird anschliessend der Dichtungskörper 23 auf die Trägerplatte 20 aufgepreßt. Dazu wird die Trägerplatte 20 auf eine stabile Grundplatte 55 zusammen mit einer Randleiste 56 mit gleicher Dicke wie die Trägerplatte 20 aufgelegt. Über dieser Randleiste 56 und Trägerplatte 20 wird ein Füllrahmen 57 gelegt, der die Randleiste 56 ganz und den Randbereich der Trägerplatte 20 teilweise überdeckt, jedoch den Bereich, in dem der Dichtungskörper 23 angebracht werden soll, frei läßt. Im Innenbereich der Trägerplatte 20 wird weiter eine Füllplatte 58 aufgelegt. Damit ist über der mit der Trägerplatte 20 verschweißten Edelstahlgaze 54 ein Raum zwischen dem Füllrahmen 57 und der Füllplatte 58 frei, in den die einzelnen Schichten aus Kohlefaser-Schlauchgeflecht 51, die mit Polyäther-Ätherketon-Harz imprägniert sind, in der gewünschten Anzahl eingelegt werden. Anschliessend werden diese Schichten 51 mittels eines Preßstempels 59 unter Druck erwärmt und abgekühlt, so daß sich die Schichten 51 zu einem kompakten Laminat, dem Dichtungskörper 23, verbinden. Durch das kristallisierte Polyäther-Ätherketon-Harz ist der Dichtungskörper 23 gleichzeitig mit der Trägerplatte 20 verbunden. Diese Verbindung wird verstärkt durch die Hinterschneidungen der Edelstahlgaze 54. Der Dichtungskörper 23 in dieser geschilderten Ausführungsform besitzt keine Fassung, sondern ist direkt auf der Trägerplatte 20 befestigt. Die Reibungskräfte werden daher von den hochzugfesten Kohlefasern des Dichtungskörpers 23 direkt aufgenommen und an die Trägerplatte 20 weitergeleitet.

Wie bereits weiter oben erwähnt, eignen sich auch noch andere Kunststoffe als Material für den Dichtungswerkstoff. In dem Ausführungsbeispiel in Fig. 11 ist ein ringsumlaufender Dichtungskörper 70 zu sehen, der aus einem Polyimid besteht. Dieser Dichtungskörper 70 ist in einer u-förmigen ebenfalls ringsumlaufenden Halteleiste 69 gefaßt und in dieser verklemmt. Die u-förmige Halteleiste besteht aus Metall und nimmt die Reibungskräfte auf, so daß diese keine schädlichen Auswirkungen auf den Kunststoff von vergleichsweise niedriger Zugfestigkeit haben. Diese uförmige Halteleiste 69 ist wiederum mit der Trägerplatte 20 verschweißt.

Als Werkstoff für den Dichtungskörper 23 wird, wie beschrieben, ein hochtemperaturbeständiger Thermoplast bzw. Thermoplastverbundwerkstoff, insbesondere ein Kohlefaserlaminat mit Polyäther-Ätherketon-Harz, bevorzugt. Es kommen jedoch auch noch andere Werkstoffe in Frage. Beispielsweise kann auf die Trägerplatte 20 als Dichtungskörper 23 eine ringsumlaufende, zusammenhängende Nickelschicht selektiv aufgalvanisiert werden. Als Gegenlauffläche kann das Preßband 6 hartverchromt sein. Zur Verschleißminderung kann in diese Nickel- oder Chromschicht zusätzlich eine Suspension aus harten Teilchen, wie Siliciumkarbid, Bornitrid oder Industriediamanten eingebaut sein. Weiterhin ist es auch möglich, Teilchen mit Trockenschmiereigenschaft wie Teflon, Graphit oder Molybdändisulfid einzubauen. Erfindungswesentlich für die Gleitflächendichtung an der Doppelbandpresse ist jedoch die einstückige Trägerplatte 20, an der der um den Rand der Druckkammer 12 ringsumlaufende Dichtungskörper 23 befestigt ist, zur Aufnahme von Längs- und Querkräften und der in vertikaler Richtung elastische, ebenfalls ringsumlaufende, zusammenhängende Balg 19, mit dem die Trägerplatte 2o an der Druckplatte 10 oder 11 befestigt ist und der eine reibungsfreie Beweglichkeit der Gleitflächendichtung 13 in vertikaler Richtung gestattet.

**Patentansprüche**

1. Gleitflächendichtung (13) an einer Doppelbandpresse (1), die jeweils ein oberes und ein unteres, über jeweils zwei in einem starren Pressengestell drehbar gelagerten Umlenktrommeln (2, 3, 4, 5) geführtes, endloses Preßband (6, 7) besitzt, auf deren Innenseiten ein mit fluiden Mitteln in Druckkammern (12) erzeugter Druck einwirkt, so daß zwischen den Preßbändern (6, 7) eine kontinuierlich vorlaufende Werkstoffbahn (9) verpreßt wird, diese Druckkammern (12) in vertikaler Richtung von im Pressengestell befestigten Druckplatten (10, 11) und den Preßbändern (6, 7) und in horizontaler Richtung von Gleitflächendichtungen (13) begrenzt sind, die am Rand der Druckplatten (10, 11) verschieblich angeordnet sind und mit einer Kraft gegen die Innenseite des Preßbandtrums (6, 7) gedrückt werden, wobei die Gleitflächendichtung (13) aus einem entlang des Randes der Druckkammer (12) ringsumlaufenden, zusammenhängenden Dichtungskörper (23) besteht, der mit einer Fläche auf dem Preßband (6, 7) gleitend aufliegt, dieser Dichtungskörper (23) an einer einstückigen, im Bereich des Randes der Druckkammer (12) nicht durchbrochenen Trägerplatte (20) befestigt ist, die mindestens teilweise innerhalb der Druckkammer (12) liegt und diese Trägerplatte (20) mittels eines in vertikaler Richtung elastischen, zusammenhängenden und um den Rand der Druckkammer (12) ringsumlaufenden Balges (19) an der Druckplatte (10, 11) befestigt ist, dadurch gekennzeichnet, daß es sich um eine steife Trägerplatte (20) handelt, die aus Metall von hoher Zugfestigkeit besteht.

2. Gleitflächendichtung nach Anspruch 1, dadurch gekennzeichnet, daß der Balg (19) aus Metall von hoher Zugfestigkeit besteht.

3. Gleitflächendichtung nach Anspruch 2, dadurch gekennzeichnet, daß der Balg (19) einen ungefähr halbrunden Querschnitt besitzt, dessen Öffnung der Innenseite der Druckkammer (12) zugewandt ist.

4. Gleitflächendichtung nach Anspruch 3, dadurch gekennzeichnet, daß der Balg (19) aus einem Paket von einzelnen Metallfolien oder -blechen (63) besteht, die an den Kanten (64) miteinander verschweißt sind und dieses Paket anschliessend zu der Form des Balges (19) gebogen wird.

5. Gleitflächendichtung nach Anspruch 3, dadurch gekennzeichnet, daß die einzelnen Metallfolien oder -bleche (63) des Balges (19) aus Galvanoformteilen bestehen, die an den Kanten (64) miteinander verschweißt sind.

6. Gleitflächendichtung nach Ansprüche 2 bis 5, dadurch gekennzeichnet, daß der Metallbalg (19) mit der Trägerplatte (20) verschweißt ist.

7. Gleitflächendichtung nach einem der Ansprüche 1 bis 6, dadurch gekennzeichnet, daß an der der Trägerplatte (20) abgewandten Seite des Balges (19) in vertikaler Richtung eine ringsumlaufende, zusammenhängende Halterung (18) am Balg (19) befestigt ist und diese Halterung (18) mit einer zusammenhängenden Fläche im Randbereich um die Druckkammer (12) ringsumlaufend gegen das Druckmittel dichtend an der Druckplatte (10, 11) angepreßt wird.

8. Gleitflächendichtung nach Anspruch 7, dadurch gekennzeichnet, daß in der Druckplatte (10, 11) entlang des Randes der Druckkammer (12) eine ringsumlaufende Nut (17) vorhanden ist und die Halterung mit einer zusammenhängenden Fläche an die druckkammerseitige Wand (24) der Nut (17) angepreßt wird.

9. Gleitflächendichtung nach Anspruch 8, dadurch gekennzeichnet, daß die Halterung (18) einen L-förmigen Querschnitt besitzt und der längere Schenkel an der druckkammerseitigen Wand (24) der Nut (17) anliegt und der kürzere Schenkel mit dem Metallbalg (19) verschweißt ist und an der horizontalen Wand (30) einer absatzförmigen Ausnehmung (31) in der Druckplatte (10, 11) anliegt, die sich der Nut (17) in der Druckkammer (12) anschließt.

10. Gleitflächendichtung nach Anspruch 8 oder 9, dadurch gekennzeichnet, daß die Halterung (18) durch eine in die Nut (17) eingelegte keilförmige Leiste (26) an die Wand (24) der Nut (17) gepreßt wird.

11. Gleitflächendichtung nach Anspruch 10, dadurch gekennzeichnet, daß die keilförmige Leiste (26) mit Schrauben (27) an der Druckplatte (10, 11) befestigt ist.

12. Gleitflächendichtung nach Anspruch 7, dadurch gekennzeichnet, daß die Halterung (66) direkt mit der Druckplatte (10, 11) verschraubt ist.

13. Gleitflächendichtung nach Anspruch 12, dadurch gekennzeichnet, daß die Halterung (66) einen stufenförmigen Querschnitt besitzt, wobei eine horizontale Fläche der Halterung (66) mit dem Metallbalg (19) verschweißt ist und die zweite horizontale, dem Metallbalg (19) abgewandte Fläche der Halterung (66) an der Druckplatte (10, 11) mit Schrauben (67) befestigt ist.

14. Gleitflächendichtung nach einem der Ansprüche 7 bis 13, dadurch gekennzeichnet, daß in der Wand (24) der Nut (17) in der Druckplatte (10, 11), an die die Halterung (18, 66) gepreßt wird, eine ringsumlaufende Nut (28) eingebracht ist, in die ein ringförmig geschlossener Dichtdraht (29) zur Abdichtung der Druckkammer (12) gegen die Atmosphärenseite an der Halterung (18, 66) eingelegt ist.

15. Gleitflächendichtung nach Anspruch 14, dadurch gekennzeichnet, daß der Dichtdraht (29) einen runden Querschnitt besitzt.

16. Gleitflächendichtung nach Anspruch 14 oder 15, dadurch gekennzeichnet, daß der Dichtdraht (29) aus Aluminium besteht.

17. Gleitflächendichtung nach Anspruch 14 oder 15, dadurch gekennzeichnet, daß der Dichtdraht (29) aus Weich-Kupfer besteht.

18. Gleitflächendichtung nach Anspruch 14 oder 15, dadurch gekennzeichnet, daß der Dichtdraht (29) aus einem Elastomer besteht.

19. Gleitflächendichtung nach einem der Ansprüche 1 bis 6, dadurch gekennzeichnet, daß an der der Trägerplatte (20) abgewandten Seite des Balges (19) eine zweite Trägerplatte (71) parallel zur Trägerplatte (20) angeordnet ist, mit der der Balg (19) verschweißt ist und die zweite Trägerplatte (71) direkt an der Druckplatte (10, 11) befestigt ist.

20. Gleitflächendichtung nach Anspruch 19, dadurch gekennzeichnet, daß die zweite Trägerplatte (71) an der Druckplatte (10, 11) mittels Schrauben (72) befestigt ist.

21. Gleitflächendichtung nach einem der Ansprüche 1 bis 20, dadurch gekennzeichnet, daß die Trägerplatte (20, 71) Durchbrüche (62) für die Zuführung des Druckmittels auf das Preßband (6, 7) in der Druckkammer (12) besitzt.

22. Gleitflächendichtung nach Anspruch 21, dadurch gekennzeichnet, daß die Trägerplatte (20, 71) Durchbrüche (21) für die wärmeübertragenden Elemente (15) besitzt.

23. Gleitflächendichtung nach Anspruch 21, dadurch gekennzeichnet, daß die Trägerplatte (48) Einbuchtungen (49) besitzt, die mit einer Fläche gleitend auf dem Preßband (6, 7) aufliegen und an deren dem Preßband (6, 7) abgewandten Fläche die wärmeübertragenden Elemente (15) anliegen.

24. Gleitflächendichtung nach einem der Ansprüche 1 bis 23, dadurch gekennzeichnet, daß der Dichtungskörper (23) einen rechteckigen Querschnitt besitzt.

25. Gleitflächendichtung nach einem der Ansprüche 1 bis 24, dadurch gekennzeichnet, daß der Dichtungskörper (23) aus Kunststoff besteht.

26. Gleitflächendichtung nach Anspruch 25, dadurch gekennzeichnet, daß der Dichtungskörper (23) aus einem Polyimid besteht.

27. Gleitflächendichtung nach Anspruch 25 oder 26, dadurch gekennzeichnet, daß der Dichtungskörper (70) fest in eine Halteleiste (69) mit u-förmigem Querschnitt eingeklemmt ist und diese Halteleiste (69) mit der Trägerplatte (20) verschweißt ist.

28. Gleitflächendichtung nach Anspruch 25, dadurch gekennzeichnet, daß der Kunststoff für den Dichtungskörper (23) mit eingebetteten Fasern von hoher Zugfestigkeit verstärkt ist.

29. Gleitflächendichtung nach Anspruch 28, dadurch gekennzeichnet, daß der Dichtungskörper (23) aus einzelnen Schichten eines Schlauchgeflechtes von Kohlefasern (51) besteht, die mit einem hochtemperaturbeständigen thermoplastischen Harz getränkt und zu einem kompakten Block verpreßt sind.

30. Gleitflächendichtung nach Anspruch 29, dadurch gekennzeichnet, daß es sich bei dem thermoplastischen Harz um Polyäther-Ätherketon handelt.

31. Gleitflächendichtung nach einem der Ansprüche 28 bis 30, dadurch gekennzeichnet, daß der Dichtungskörper (23) mit einer seitlichen metallischen Fassung (22) verstärkt ist und diese Fassung (22) an der Trägerplatte (20) verschweißt ist.

32. Gleitflächendichtung nach Anspruch 31, dadurch gekennzeichnet, daß die Fassung (22) in einer Vertiefung (32) in der Trägerplatte (20) verschweißt ist.

33. Gleitflächendichtung nach Anspruch 31 oder 32, dadurch gekennzeichnet, daß die mit thermoplastischem Harz imprägnierten Schichten von Kohlefaser-Schlauchgeflecht (51) in eine ringförmig geschlossene, metallische Form (50) mit u-förmigem Querschnitt gelegt werden, dort zu einem kompakten Block, dem Dichtungskörper (23), unter Erwärmung und darauffolgender Abkühlung verpreßt werden und anschliessend diese u-förmige Form (50) bis auf die Fassung (22) weggeätzt wird.

34. Gleitflächendichtung nach Anspruch 33, dadurch gekennzeichnet, daß die Innenwände der Form (50) Hinterschneidungen (68) zur besseren Verbindung des Dichtungskörpers (23) mit der Fassung (22) aufweisen.

35. Gleitflächendichtung nach einem der Ansprüche 28 bis 30, dadurch gekennzeichnet, daß auf der Trägerplatte (20) ringsumlaufend, entlang des Randes der Druckkammer (12) eine Metallgaze (54) aufgeschweißt ist, auf die die mit thermoplastischem Harz imprägnierten Schichten von Kohlefaser-Schlauchgeflecht (51) unter Erwärmung und anschliessender Abkühlung zum Dichtungskörper (23) aufgepreßt werden.

36. Gleitflächendichtung nach Anspruch 35, dadurch gekennzeichnet, daß die Metallgaze (54) in einer Ausnehmung (53) in der Trägerplatte (20) eingeschweißt ist.

37. Gleitflächendichtung nach Anspruch 35 oder 36, dadurch gekennzeichnet, daß die Metallgaze (54) aus Edelstahl besteht.

38. Gleitflächendichtung nach einem der Ansprüche 1 bis 23, dadurch gekennzeichnet, daß der Dichtungskörper (23) aus einer entlang des Randes der Druckkammer (12) ringsumlaufenden, selektiv auf die Trägerplatte (20) aufgalvanisierten metallischen Gleitschicht besteht.

39. Gleitflächendichtung nach Anspruch 38, dadurch gekennzeichnet, daß es sich bei der metallischen Gleitschicht um eine Nickelschicht handelt.

40. Gleitflächendichtung nach einem der Ansprüche 38 oder 39, dadurch gekennzeichnet, daß die Innenfläche des Preßbandes (6, 7) als Gegenlauffläche für die den Dichtungskörper (23) bildende Gleitschicht hartverchromt ist.

41. Gleitflächendichtung nach Ansprüche 38 bis 40, dadurch gekennzeichnet, daß in wenigstens eine der Beschichtungen verschleißhemmende Teilchen eingelagert sind.

42. Gleitflächendichtung nach Anspruch 41, dadurch gekennzeichnet, daß es sich bei den verschleißhemmenden Teilchen um Siliciumkarbid, Bornitrid oder Industriediamanten von wenigen Mikrometer Größe handelt.

43. Gleitflächendichtung nach Ansprüche 38 bis 40. dadurch gekennzeichnet, daß in wenigstens eine der Beschichtungen Teilchen mit Trockenschmiereigenschaft eingelagert sind.

44. Gleitflächendichtung nach Anspruch 43, dadurch gekennzeichnet, daß es sich bei den Teilchen mit Trockenschmiereigenschaft um Graphit, Teflon oder Molybdändisulfid handelt.

45. Gleitflächendichtung nach einem der Ansprüche 1 bis 44, dadurch gekennzeichnet, daß eine weitere ringförmig geschlossene, äußere Gleitflächendichtung (39) in der Druckplatte (10, 11) so angebracht wird, daß sie die innere Gleitflächendichtung (40) ganz umfaßt und zwischen den beiden Gleitflächendichtungen (39, 40) ein Hohlraum (44) entsteht, der die Leckage des Druckmittels aus der Druckkammer (12) aufnimmt, und diese Leckage durch Bohrungen (47) in der Druckplatte (10, 11) aus diesem Hohlraum (44) abgesaugt wird.

46. Gleitflächendichtung nach Anspruch 45, dadurch gekennzeichnet, daß die äußere Gleitflächendichtung (39) einen ringsumlaufenden Dichtungskörper (42) besitzt, der mit einer Fläche auf dem Preßband (6, 7) gleitend anliegt, dieser Dichtungskörper (42) an einem ebenfalls ringsumlaufenden Metallbalg (41) angebracht ist und der Metallbalg (41) an der dem Preßband (6, 7) abgewandten Seite an einer ringsumlaufenden Halterung (38) befestigt ist, die wiederum an der Druckplatte (10, 11) angebracht ist.

47. Gleitflächendichtung nach Anspruch 46, dadurch gekennzeichnet, daß der Dichtungskörper (42) für die äußere Gleitflächendichtung (39) aus einem auf ein Metallband aufvulkanisiertem Elastomer besteht und das Metallband am Metallbalg (41) angeschweißt ist.

48. Gleitflächendichtung nach Anspruch 46 oder 47, dadurch gekennzeichnet, daß die Halterung (38) für die äußere Gleitflächendichtung (39) an der druckkammerabgewandten Wand (37) einer um den Rand der Druckkammer (12) ringsumlaufenden Nut (33) in der Druckplatte (10, 11) und die Halterung (35) für die innere Gleitflächendichtung (40) an der druckkammerseitigen Wand (36) derselben Nut (33) anliegen, beide Halterungen (35, 38) mittels einer keilförmigen Leiste (43) an die entsprechenden Wände (36, 37) der Nut (33) gepreßt werden und die keilförmige Leiste (43) in der Druckplatte (10, 11) verschraubt ist.

49. Gleitflächendichtung nach Anspruch 48, dadurch gekennzeichnet, daß im Grund der Nut (33) ein Sammelraum (46) für die Leckage des Druckmittels vorhanden ist und Durchgangsbohrungen (45) vom Hohlraum (44) zum Sammelraum (46) durch die keilförmige Leiste (43) gehen.

50. Gleitflächendichtung nach Anspruch 49, dadurch gekennzeichnet, daß die Bohrungen (47) in der Druckplatte (10, 11), mit denen die Leckage abgesaugt wird, in dem Sammelraum (46) im Grund der Nut (33) münden.

**Revendications**

1. Garniture d'étanchéité (13) de surface de glissement sur une presse à double bande (1), qui comporte respectivement une bande sans fin supérieure de pressage et une bande sans fin inférieure de pressage (6, 7), bandes sur les faces internes desquelles s'exerce une pression créée par des fluides dans des chambres de pression (12), de sorte qu'entre ces bandes de pressage (6, 7) est pressée une bande de matériau (9) défilant en continu, ces chambres de pression (12) étant délimitées en direction verticale par des plaques de pression (10, 11) fixées sur le bâti de la presse et par les bandes de pressage (6, 7), et en direction horizontale par des garnitures d'étanchéité de surfaces de glissement (13), qui sont disposées sur le bord des plaques de pression (10, 11) de façon à pouvoir se déplacer, et qui sont poussées par une force contre la face interne du brin de la bande de pressage (6, 7), la garniture d'étanchéité de surface de glissement (13) étant constituée par un corps d'étanchéité (23) continu, s'étendant périphériquement tout autour, le long du bord de la chambre de pression (12), et qui s'applique par une surface sur la bande de pressage (6, 7) en pouvant glisser, ce corps d'étanchéité (23) étant fixé sur une plaque porteuse (20) d'une seule pièce, non-interrompue dans la zone du bord de la chambre de pression (12), et qui se situe au moins partiellement à l'intérieur de la chambre de pression (12), cependant que cette plaque porteuse (20) est fixée à la plaque de pression (10, 11) au moyen d'un soufflet continu (19), élastique en direction verticale et s'étendant tout autour du bord de la chambre de pression (12), garniture d'étanchéité de surface de glissement caractérisée en ce qu'il s'agit d'une plaque porteuse rigide (20), constituée par un métal ayant une résistance élevée à la traction.

2. Garniture d'étanchéité de surface de glissement selon la revendication 1, caractérisée en ce que le soufflet (19) est constitué d'un métal ayant une résistance élevée à la traction.

3. Garniture d'étanchéité de surface de glissement selon la revendication 2, caractérisée en ce que le soufflet (19) a une section transversale à peu près demi-ronde, dont l'ouverture est tournée vers l'intérieur de la chambre de pression (12).

4. Garniture d'étanchéité de surface de glissement selon la revendication 3, caractérisée en ce que le soufflet (19) est constitué par un paquet de feuilles ou de tôles métalliques individuelles, qui sont soudées ensemble sur leurs bords (64), et ce paquet est ensuite courbé pour obtenir la forme du soufflet (19).

5. Garniture d'étanchéité de surface de glissement selon la revendication 3, caractérisée en ce que les feuilles ou tôles métalliques individuelles (63) du soufflet (19) sont constituées par des pièces électrophorèse, qui sont soudées ensemble sur leurs bords (64).

6. Garniture d'étanchéité de surface de glissement selon les revendications 2 à 5, caractérisée en ce que le soufflet métallique (19) est soudé à la plaque porteuse (20).

7. Garniture d'étanchéité de surface de glissement selon une des revendications 1 à 6, caractérisée en ce que, sur le côté, opposé à la plaque porteuse (20), du soufflet (19), est fixé un support continu (18), s'étendant tout autour du soufflet (19), et qui est pressé contre la plaque de pression (10, 11), en assurant l'étanchement vis à vis du fluide sous pression avec une surface continue dans la zone de bordure s'étendant tout autour de la chambre de pression (12).

8. Garniture d'étanchéité de surface de glissement selon la revendication 7, caractérisée en ce qu'une gorge annulaire (17) est ménagée dans la plaque de pression (10, 11), le long du bord de la chambre de pression (12), et le support (18) est pressé avec une surface continue contre la paroi (24), côté chambre de pression, de cette gorge (17).

9. Garniture d'étanchéité de surface de glissement selon la revendication 8, caractérisée en ce que le support (18) a une section transversale en forme de L, dont la branche la plus longue s'applique à la paroi (24), côté chambre de pression, de la gorge (17), et dont la branche la plus courte est soudée au soufflet métallique (19) et s'applique contre la paroi horizontale (30) d'un évidement en forme de gradin (31) sur la plaque de pression (10, 11), évidement qui se raccorde à la gorge (17).

10. Garniture d'étanchéité de surface de glissement selon la revendication 8 ou 9, caractérisée en ce que le support (18) est pressé contre la paroi (24) de la gorge (17) par une baguette en forme de coin (26) insérée dans la gorge (17).

11. Garniture d'étanchéité de surface de glissement selon la revendication 10, caractérisée en ce que la baguette en forme de coin (26) est fixée à la plaque de pression (10, 11) par des vis (27).

12. Garniture d'étanchéité de surface de glissement selon la revendication 7, caractérisée en ce que le support (66) est directement vissé sur la plaque de pression (10, 11).

13. Garniture d'étanchéité de surface de glissement selon la revendication 12, caractérisée en ce que le support (66) a une section transversale en forme de gradin, une surface horizontale de ce support (66) étant soudée au soufflet métallique (19), tandis que la seconde surface horizontale, opposée au soufflet (19) du support (66), est fixée à la plaque de pression (10, 11) par des vis (67).

14. Garniture d'étanchéité de surface de glissement selon une des revendications 7 à 13, caractérisée en ce que, dans la paroi (24) de la gorge (17) dans la plaque de pression (10, 11), paroi contre laquelle est pressé le support (18, 66) est réalisée une gorge périphérique (28) dans laquelle est inséré un joint d'étanchéité annulaire fermé (29) s'appliquant contre le support (18, 66) pour étancher vis à vis de l'atmosphère, la chambre de pression (12).

15. Garniture d'étanchéité de surface de glissement selon la revendication 14, caractérisée en ce que le joint d'étanchéité (29) a une section transversale ronde.

16. Garniture d'étanchéité de surface de. glissement selon la revendication 14 ou la revendication 15, caractérisée en ce que le joint d'étanchéité (29) est en aluminium.

17. Garniture d'étanchéité de surface de glissement selon la revendication 14 ou la revendication 15, caractérisée en ce que le joint d'étanchéité (29) est en cuivre mou.

18. Garniture d'étanchéité de surface de glissement selon la revendication 14 ou la revendication 15, caractérisée en ce que le joint d'étanchéité (29) est constitué par un élastomère.

19. Garniture d'étanchéité de surface de glissement selon une des revendications 1 à 6, caractérisée en ce que, sur le côté, opposé à la plaque porteuse (20) du soufflet (19), est disposée, parallèlement à cette plaque porteuse (20), une seconde plaque porteuse (71) à laquelle est soudé le soufflet (19), et cette seconde plaque porteuse (71) est directement fixée sur la plaque de pression (10, 11).

20. Garniture d'étanchéité de surface de glissement selon la revendication 19, caractérisée en ce que la seconde plaque porteuse (71) est fixée à la plaque de pression (10, 11) au moyen de vis (72).

21. Garniture d'étanchéité de surface de glissement selon une des revendications 1 à 20, caractérisée en ce que la plaque porteuse (20, 71) comporte des ajours (62) pour permettre d'amener le fluide sous pression sur la bande de pressage (6, 7) dans la chambre de pression (12).

22. Garniture d'étanchéité de surface de glissement selon la revendication 21, caractérisée en ce que la plaque porteuse (20, 71) comporte des ajours (21) pour les éléments (15) transmettant la chaleur.

23. Garniture d'étanchéité de surface de glissement selon la revendication 21, caractérisée en ce que la plaque porteuse (48) comporte des renfoncements (49) qui, par une face, s'appliquent en glissant sur la bande de pressage (6, 7), tandis que sur leur autre face, opposée à la bande de pressage (6, 7), s'appliquent les éléments (15) transmettant la chaleur.

24. Garniture d'étanchéité de surface de glissement selon l'une des revendications 1 à 23, caractérisée en ce que le corps d'étanchéité (23) a une section transversale rectangulaire.

25. Garniture d'étanchéité de surface de glissement selon une des revendications 1 à 24, caractérisée en ce que le corps d'étanchéité (23) est en matière plastique.

26. Garniture d'étanchéité de surface de glissement selon la revendication 25, caractérisée en ce que le corps d'étanchéité (23) est constitué par une polyimide.

27. Garniture d'étanchéité de surface de glissement selon la revendication 25 ou la revendication 26, caractérisée en ce que le corps d'étanchéité (70) est fermement serré dans une baguette de maintien (69) ayant une section transversale en forme de U, et cette baguette de maintien (69) est soudée à la plaque porteuse (20).

28. Garniture d'étanchéité de surface de glissement selon la revendication (25) caractérisée en ce que la matière plastique pour le corps d'étanchéité (23) est renforcée par des fibres enrobées ayant une résistance élevée à la traction.

29. Garniture d'étanchéité de surface de glissement selon la revendication 28, caractérisée en ce que le corps d'étanchéité (23) est constitué par des couches individuelles d'un treillis tubulaire de fibres de carbone, qui sont imbibées d'une résine thermoplastique résistant à des températures élevées et pressées pour obtenir un bloc compact.

30. Garniture d'étanchéité de surface de glissement selon la revendication 29, caractérisée en ce que, dans le cas de la résine thermoplastique, il s'agit d'une polyéther-éthercétone.

31. Garniture d'étanchéité de surface de glissement selon une des revendications 28 à 30, caractérisée en ce que le corps d'étanchéité (23) est renforcé par une monture métallique latérale (22) et cette monture (22) est soudée à la plaque porteuse (20).

32. Garniture d'étanchéité de surface de glissement selon la revendication 31, caractérisée en ce que la monture (22) est soudée dans une cavité (32) de la plaque porteuse (20).

33. Garniture d'étanchéité de surface de glissement selon la revendication 31 ou la revendication 32, caractérisée en ce que les couches imprégnées de résine thermoplastique, de treillis de fibres de carbone (51), sont placées dans un moule métallique (50) en forme d'anneau fermé ayant une section transversale en forme de U, où elles sont pressées en étant échauffées et ensuite refroidies, pour constituer un bloc compact, c'est-à-dire le corps d'étanchéité (23), puis le moule (50) à section transversale en forme de U est enlevé par attaque chimique, à l'exception de la monture (22).

34. Garniture d'étanchéité de surface de glissement selon la revendication 33, caractérisée en ce que les parois internes du moule (50) comportent des contre-dépouilles (68) pour assurer une meilleure liaison du corps d'étanchéité (23) avec la monture (22).

35. Garniture d'étanchéité de surface de glissement selon une des revendications 28 à 30, caractérisée en ce qu'une gaz métallique (54) est soudée sur la plaque porteuse (20), tout autour le long du bord de la chambre de pression (12), gaze sur laquelle sont pressées, en étant chauffées et ensuite refroidies, afin de constituer le corps d'étanchéité (23), les couches, imprégnées de résine thermoplastique, de treillis tubulaire de fibres de carbone (51).

36. Garniture d'étanchéité de surface de glissement selon la revendication 25, caractérisée en ce que la gaze métallique (54) est soudée dans un évidement (53) de la plaque porteuse (20).

37. Garniture d'étanchéité de surface de glissement selon la revendication 35 ou la revendication 36, caractérisée en ce que la gaze métallique (54) est en acier inoxydable.

38. Garniture d'étanchéité de surface de glissement selon une des revendications 1 à 23, caractérisée en ce que le corps d'étanchéité (23) est constitué par une couche métallique de glissement, galvanisée sélectivement sur la plaque porteuse (20) et s'étendant tout autour du long du bord de la chambre de pression (12).

39. Garniture d'étanchéité de surface de glissement selon la revendication 38, caractérisée en ce que, dans le cas de la couche métallique de glissement, il s'agit d'une couche de nickel.

40. Garniture d'étanchéité de surface de glissement selon une des revendications 38 ou 39, caractérisée en ce que la surface interne de la bande de pressage (6, 7) en tant que surface de déplacement antagoniste pour le corps d'étanchéité (23), est revêtue de chrome dur.

41. Garniture d'étanchéité de surface de glissement selon les revendications 38 à 40, caractérisée en ce que des particules modérant l'usure sont incorporées dans au moins une des couches.

42. Garniture d'étanchéité de surface de glissement selon la revendication 41, caractérisée en ce que, dans le cas des particules modérant l'usure, il s'agit de particules de carbure de silicium, de nitrure de bore, ou de diamants industriels, ayant des dimensions de quelques micromètres.

43. Garniture d'étanchéité selon les revendications 38 à 40, caractérisée en ce que des particules ayant des propriétés lubrifiantes à sec sont incorporées dans au moins une des couches.

44. Garniture d'étanchéité selon la revendication 43, caractérisée en ce que, dans le cas des particules ayant des propriétés lubrifiantes à sec, il s'agit de graphite, de Téflon ou de bisulfite de molybdène.

45. Garniture d'étanchéité de surface de glissement selon une des revendications 1 à 44, caractérisée en ce qu'une autre garniture d'étanchéité de surface de glissement (39), extérieure, en forme d'anneau fermé, est rapportée sur la plaque de pression (10, 11) de façon qu'elle entoure complètement la garniture d'étanchéité de surface de glissement intérieure (40) et qu'entre les deux garnitures d'étanchéité de surface de glissement (39, 40) soit ménagé un espace creux (44), qui reçoit les fuites de fluide sous pression sortant de la chambre de pression (12), et ces fuites sont aspirées hors de cet espace creux (44) par des perçages (47) dans la plaque de pression (10, 11).

46. Garniture d'étanchéité de surface de glissement selon la revendication 45, caractérisée en ce que la garniture extérieure d'étanchéité de surface de glissement (39) comporte un corps d'étanchéité (42) s'étendant tout autour, qui par une de ses faces s'applique en glissant sur la bande de pressage (6, 7), ce corps d'étanchéité (42) étant fixé à un soufflet métallique (41) s'étendant également tout autour, et ce soufflet métallique (41), par son côté opposé à la bande de pressage (6, 7) étant fixé à un support (38) s'étendant tout autour .et qui est luimême fixé à la plaque de pression (10, 11).

47. Garniture d'étanchéité de surface de glissement selon la revendication 46, caractérisée en ce que le corps d'étanchéité (42) de la garniture d'étanchéité de surface de glissement (39), placée à l'extérieur, est constitué par un élastomère vulcanisé sur une bande métallique qui est elle-même soudée au soufflet métallique (41).

48. Garniture d'étanchéité de surface de glissement selon la revendication 46 ou la revendication 47, caractérisée en ce que le support (38) pour la garniture d'étanchéité de surface de glissement (39), placée à l'extérieur, s'applique contre la paroi (37) opposée à la chambre de pression, d'une gorge (33) s'étendant tout autour de la chambre de pression (12), et que le support (35) pour la garniture d'étanchéité de surface de glissement (40), placée à l'intérieur, s'applique contre la paroi (36), côté chambre de pression, de cette même gorge (33), les deux supports (35, 38) étant pressés au moyen d'une baguette (43) en forme de coin contre les parois correspondantes (36, 37) de la gorge (33), et cette baguette (43) en forme de coin étant vissée sur la plaque de pression (10, 11).

49. Garniture d'étanchéité de surface de glissement selon la revendication 48, caractérisée en ce qu'il est prévu, au fond de la gorge (33), une chambre collectrice (46) pour les fuites de fluide de pression, et des perçages traversants (45) vont de l'espace creux (44) à la chambre collectrice (46) à travers la baguette en forme de coin (43).

50. Garniture d'étanchéité de surface de glissement selon la revendication 49, caractérisée en ce que les perçages (47) dans la plaque de pression (10, 11), par lesquels les fuites sont aspirées, débouchent dans la chambre collectrice (46) au fond de la gorge (33).

**Claims**

1. Sliding surface seal (13) at a double belt press (1), which has respective upper and lower endless press belts (6, 7), which are guided over respective two deflecting drums (2, 3, 4, 5) rotatably borne in a rigid press frame and on the inward sides of which acts a pressure produced by fluid means in pressure chambers (12) so that a continuously advancing material web (9) is compressed between the press belts (6, 7), these pressure chambers (12) are bounded in vertical direction by pressure plates (10, 11) fastened in the press frame and by the press belts (6, 7) and in horizontal direction by sliding surface seals (13), which are displaceably arranged at the rim of the pressure plates (10, 11) and urged by a force against the inward side of the press belt run (6, 7), wherein the sliding surface seal (13) consists of a contiguous sealing body (23), which runs round along the rim of the pressure chamber (12) and slidingly rests by a surface on the press belt (6, 7), this sealing body is fastened at a one-piece carrier plate (20), which is not pierced in the region of the rim of the pressure chamber (12) and lies at least partially within the pressure chamber (12), and this carrier plate (20) is fastened at the pressure plate (10, 11) by means of a contiguous bellows (19), which is elastic in vertical direction and runs round along the rim of the pressure chamber (12), characterised thereby, that a stiff carrier plate (20) is concerned, which consists of metal of high tensile strength.

2. Sliding surface seal according to claim 1, characterised thereby, that the bellows (19) consists of metal of high tensile strength.

3. Sliding surface seal according to claim 2, characterised thereby, that the bellows (19) has an approximately half-round cross-section, the opening of which faces the inward side of the pressure chamber (12).

4. Sliding surface seal according to claim 3, characterised thereby, that the bellows (19) consists of a packet of individual metal foils or sheets (63), which are welded together at the edges (64), and this packet is subsequently bent into the shape of the bellows (19).

5. Sliding surface seal according to claim 3, characterised thereby, that the individual metal foils or sheets (63) consist of galvanically shaped parts which are welded together at the edges (64).

6. Sliding surface seal according to claims 2 to 5, characterised thereby, that the metal bellows (19) is welded together with the carrier plate (20).

7. Sliding surface seal according to one of the claims 1 to 6, characterised thereby, that a contiguous mount (18), which runs round in vertical direction at the side of the bellows (19) remote from the carrier plate (20), is fastened at the bellows (19) and this mount (18) is urged by a contiguous surface in the rim region running round the pressure chamber (12) against the pressure plate (10, 11) and sealing against the pressure medium.

8. Sliding surface seal according to claim 7, characterised thereby, that a groove (17), which runs round along the rim of the pressure chamber (12), is present in the pressure plate (10, 11) and the mount is urged by a contiguous surface against the pressure side wall (24) of the groove (17).

9. Sliding surface seal according to claim 8, characterised thereby, that the mount (18) has an L-shaped cross-section and the longer limb lies against the pressure side wall (24) of the groove (17) and the shorter limb is welded together with the metal bellows (19) and lies against the horizontal wall (30) of a stepped recess (31) in the pressure plate (10, 11), which adjoins the groove (17) in the pressure chamber (12).

10. Sliding surface seal according to claim 8 or 9, characterised thereby, that the mount (18) is urged against the wall (24) of the groove (17) by a wedge-shaped strip (26) laid into the groove (17).

11. Sliding surface seal according to claim 10, characterised thereby, that the wedge-shaped strip (26) is fastened at the pressure plate (10, 11) by screws (27).

12. Sliding surface seal according to claim 7, characterised thereby, that the mount (66) is directly screwed together with the pressure plate (10, 11).

13. Sliding surface seal according to claim 12, characterised thereby, that the mount (66) has a stepped cross-section, wherein an horizontal surface of the mount (66) is welded together with the metal bellows (19) and the second horizontal surface, remote from the metal bellows (19), of the mount (66) is fastened at the pressure plate (10, 11) by screws (67).

14. Sliding surface seal according to one of the claims 7 to 13, characterised thereby, that an encircling groove (28), into which an annularly closed sealing wire (29) is laid for sealing the pressure chamber (12) against the atmospheric side at the mount (18, 66), is introduced in the wall (24) of the groove (17) in the pressure plate (10, 11), against which the mount (18, 66), is urged.

15. Sliding surface seal according to claim 14, characterised thereby, that the sealing wire (29) has a round cross-section.

16. Sliding surface seal according to claim 14 or 15, characterised thereby, that the sealing wire (29) consists of aluminium.

17. Sliding surface seal according to claim 14 or 15, characterised thereby, that the sealing wire (29) consists of soft copper.

18. Sliding surface seal according to claim 14 or 15, characterised thereby, that the sealing wire (29) consists of an elastomer.

19. Sliding surface seal according to one of the claims 1 to 6, characterised thereby, that at the side of the bellows (19) remote from the carrier plate (20), a second carrier plate (71) is arranged parallel to the carrier plate (20), with which the bellows (19) is welded together, and the second carrier plate (71) is fastened directly at the pressure plate (10, 11).

20. Sliding surface seal according to claim 19, characterised thereby, that the second carrier plate (71) is fastened at the pressure plate (10, 11) by means of screws (72).

21. Sliding surface seal according to one of the claims 1 to 20, characterised thereby, that the carrier plate (20, 71) has passages (62) for the feed of the pressure medium on to the press belt (6, 7) in the pressure chamber (12).

22. Sliding surface seal according to claim 21, characterised thereby, that the carrier plate (20, 71) has passages (21) for the heat-transmitting elements (15).

23. Sliding surface seal according to claim 21, characterised thereby, that the carrier plate (48) has concavities (49), which rest by one surface slidingly on the press belt (6, 7) and against the other surface of which remote from the press belt (6, 7) rest the heat-transmitting elements (15).

24. Sliding surface seal according to one of the claims 1 to 23, characterised thereby, that the sealing body (23) has a rectangular cross-section.

25. Sliding surface seal according to one of the claims 1 to 24, characterised thereby, that the sealing body (23) consists of synthetic material.

26. Sliding surface seal according to claim 25, characterised thereby, that the sealing body (23) consists of a polyamide.

27. Sliding surface seal according to claim 25 or 26, characterised thereby, that the sealing body (70) is firmly wedged into a retaining strip (69) of U-shaped cross-section and this retaining strip (69) is welded together with the carrier plate (20).

28. Sliding surface seal according to claim 25, characterised thereby, that the synthetic material for the sealing body (23) is reinforced by embedded fibres of high tensile strength.

29. Sliding surface seal according to claim 26, characterised thereby, that the sealing body (23) consists of individual layers of a hose fabric of carbon fibres (51), which are impregnated by a highly temperature-resistant thermoplastic resin and compressed into a compact block.

30. Sliding surface seal according to claim 29, characterised thereby, that polyether-ether ketone is concerned in the case of the thermoplastic resin.

31. Sliding surface seal according to claims 28 to 30, characterised thereby, that the sealing body (23) is re-inforced by a lateral metallic mount (22) and this mount (22) is welded to the carrier plate (20).

32. Sliding surface seal according to claim 31, characterised thereby, that the mount (22) is welded into a depression of the carrier plate (20).

33. Sliding surface seal according to claim 31 or 32, characterised thereby, that the layers of carbon fibre hose fabric (51), which are impregnated by thermoplastic resin, are laid into a closed annular metallic mould (50) of U-shaped cross-section, there compressed into a compact block, the sealing body (23), under heating and subsequent cooling and this U-shaped mould (50) is subsequently etched away except for the mount (22).

34. Sliding surface seal according to claim 33, characterised thereby, that the inward walls of the mould (50) display undercuts (68) for better connection of the sealing body (23) with the mount (22).

35. Sliding surface seal according to one of the claims 28 to 30, characterised thereby, that a metal gauze (54), onto which the layers of carbon fibre hose fabric (51), which are impregnated by thermoplastic resin, are pressed to the sealing body (23) under heating and subsequent cooling, is welded on at the carrier plate (20) and runs round along the rim of the pressure chamber (12).

36. Sliding surface seal according to claim 35, characterised thereby, that the metal gauze (54) is welded into a recess (53) in the carrier plate (20).

37. Sliding surface seal according to claim 35 or 36, characterised thereby, that the metal gauze (54) consists of fine steel.

38. Sliding surface seal according to one of the claims 1 to 23, characterised thereby, that the sealing body (23) consists of a metallic sliding layer, which has been selectively electroplated onto the carrier plate (20) and runs round along the rim of the pressure chamber (12).

39. Sliding surface seal according to claim 38, characterised thereby, that a nickel layer is concerned in the case of the metallic sliding layer.

40. Sliding surface seal according to one of the claims 38 or 39, characterised thereby, that the inward surface of the press belt (6, 7) is chromium-plated as countercontact surface for the sliding layer forming the sealing body (23).

41. Sliding surface seal according to claims 38 to 40, characterised thereby, that wear-retarding particles are embedded in at least one of the coatings.

42. Sliding surface seal according to claim 41, characterised thereby, that silicon carbide, boron nitride or industrial diamonds of a few micrometres in size is concerned in the case of the wear-retarding particles.

43. Sliding surface seal according to claims 38 to 40, characterised thereby, that particles with dry lubricant property are embedded in at least one of the coatings.

44. Sliding surface seal according to claim 43, characterised thereby, that graphite, TEFLON or molybdenum sulphide is concerned in the case of the particles with dry lubricant property.

45. Sliding surface seal according to one of the claims 1 to 44, characterised thereby, that a further closed annular outer sliding surface seal (39) is so mounted in the pressure plate (10, 11) that it encompasses the inner sliding surface seal (40) entirely and a hollow space (44), which receives the leakage of the pressure medium out of the pressure chamber (12), arises between both the sliding surface seals (39, 40), and this leakage is sucked out of this hollow space (44) through bores (47) in the pressure plate (10, 11).

46. Sliding surface seal according to claim 45, characterised thereby, that the outer sliding surface seal (39) has an encircling sealing body (42), which by one surface rests slidingly against the press belt (6, 7), this sealing body (42) is mounted at a likewise encircling metal bellows (41) and the metal bellows (41) is fastened on the side remote from the press belt (6, 7) to an encircling mount (38), which is in turn mounted at the pressure plate (10, 11).

47. Sliding surface seal according to claim 46, characterised thereby, that the sealing body (42) for the outer sliding surface seal (39) consists of an elastomer vulcanised onto a metal tape and the metal tape is welded on at the metal bellows (41).

48. Sliding surface seal according to claim 46 or 47, characterised thereby, that the mount (38) for the outer sliding surface seal (39) lies against the wall (37), remote from the pressure chamber, of a groove (33), which runs round along the rim of the pressure chamber (12), in the pressure plate (10, 11) and the mount (35) for the inner sliding surface seal (40) lies against the wall (36), at the side of the pressure chamber, of the same groove (33), both mounts (35, 38) are urged by means of a wedge-shaped strip (43) against the corresponding walls (36, 37) of the groove (33) and the wedge-shaped strip (43) is screwed together with the pressure plate (10, 11).

49. Sliding surface seal according to claim 48, characterised thereby, that a collecting space (46) for the leakage of the pressure medium is present in the base of the groove (33) and passage bores (45) from the hollow space (44) to the collecting space (46) pass through the wedge-shaped strip (43).

50. Sliding surface seal according to claim 49, characterised thereby, that the bores (47) in the pressure plate (10, 11), by which the leakage is sucked away, open into the collecting space (46) in the base of the groove (33).

Fig. 1

Fig. 2

EP 0 245 762 B1

3

Fig. 3

Fig. 4

4

Fig. 5

Fig. 6                    Fig. 7

Fig. 8

Fig. 9

Fig. 10

Fig. 11

Fig. 12